# EUROPÄISCHE PATENTANMELDUNG

(11) **EP 4 785 800 A1**
(43) Veröffentlichungstag der Anmeldung: **05.08.2026**
(21) Anmeldenummer: 26154902.6
(22) Anmeldetag: 29.01.2026
(51) Int. Cl.: A23B 11/133, A23B 70/30, A23B 2/80

(54) **VORRICHTUNG ZUR DIREKTEN ERHITZUNG EINES FLÜSSIGEN LEBENSMITTELPRODUKTES UND VERFAHREN DAZU**

(30) Priorität: 03.02.2025 DE 102025103749
(71) Anmelder: KRONES Aktiengesellschaft, 93073 Neutraubling (DE)
(72) Erfinder: Hoeller, Stefan, 93073 Neutraubling (DE); Oehmichen, Thomas, 93073 Neutraubling (DE)
(74) Vertreter: Grünecker Patent- und Rechtsanwälte PartG mbB

(57) **Zusammenfassung**

Vorrichtung zur direkten Erhitzung eines flüssigen Lebensmittelproduktes mittels Ultrahochtemperatur (UHT), umfassend einen Produktvorwärmer, insbesondere einen als Wärmetauscher ausgebildeten Produktvorwärmer, eine Erhitzungsvorrichtung zum direkten Erhitzen des vorgewärmten flüssigen Lebensmittelproduktes, einen Flash-Kühler und einen Produktkühler, insbesondere einen als Wärmetauscher ausgebildeten Produktkühler, wobei die Vorrichtung einen Sekundärkreislauf zum Transport von Wärme vom Produktkühler zum Produktvorwärmer umfasst, wobei im Sekundärkreislauf die Wärmesenke einer Wärmepumpe angeordnet ist.

## Beschreibung

Die Erfindung bezieht sich auf eine Vorrichtung und ein Verfahren zur direkten Erhitzung eines flüssigen Lebensmittelproduktes.

Es ist bekannt, hitzeempfindliche flüssige Lebensmittelprodukte mittels UHT (Ultrahochtemperatur-Erhitzung) haltbar zu machen. Insbesondere ist es bekannt, Lebensmittelprodukte mittels direkter Erhitzung durch Dampf zu erhitzen und anschließend wieder durch Flash-Kühlen, also durch Abkühlen mit Unterdruck unter Abzug von Dampf, abzukühlen. Eine direkte Erhitzung durch Dampf hat den Vorteil, dass die Lebensmittel schnell auf die benötigte Behandlungstemperatur erhitzt werden können und schnell wieder herabgekühlt werden können, wenn sie die benötigte Zeit heiß gehalten wurden.

Da jedoch für eine UHT hohe Temperaturen erreicht werden müssen, sind die entsprechenden Verfahren sehr ressourcenintensiv. Es ist bekannt, in derartigen Vorrichtungen eine Wärmerückgewinnung durchzuführen. So zeigt beispielsweise die WO2014/037296 eine Nutzung der Abwärme aus dem Dampfkondensator durch eine Wärmepumpe, die Wärme an einen zusätzlichen Erhitzer für das Produkt überträgt. EP 3 558 028 beschreibt eine Rückgewinnung von Dampf, der für die direkte Erhitzung verwendet wird und somit Lebensmittelqualität haben muss.

Der Erfindung liegt nun die Aufgabe zu Grunde, eine Vorrichtung und ein Verfahren mit hoher Energieeffizienz zusätzlich weiter zu verbessern, insbesondere z.B. leichter herstellbar und/oder flexibler in der Handhabung zu machen.

Die Erfindung umfasst eine Vorrichtung nach Anspruch 1, ein System nach Anspruch 9, ein Verfahren nach Anspruch 10, ein Verfahren nach Anspruch 14 und eine Verwendung nach Anspruch 15. Weitere Ausführungsformen sind in den abhängigen Ansprüchen beschrieben.

Das Verfahren zur direkten Erhitzung eines flüssigen Lebensmittelproduktes, im Folgenden auch als Produkt bezeichnet, mittels Ultrahochtemperatur (UHT) umfasst ein Vorwärmen des Produktes (das z.B. mit einer Temperatur von ca. 20°C, z.B. zwischen 10°C und 25°C zugeführt werden kann) mit einem Produktvorwärmer auf eine Eintrittstemperatur. Typischerweise liegt diese Eintrittstemperatur bei ca. 80°C, beispielsweise zwischen 70°C und 90°C. Das Verfahren umfasst des Weiteren ein Zuführen des Produktes in eine Erhitzungsvorrichtung, wobei das Produkt beim Eintritt in die Erhitzungsvorrichtung die Eintrittstemperatur hat.

Des Weiteren umfasst das Verfahren ein direktes Erhitzen des Produktes von der Eintrittstemperatur auf die Behandlungstemperatur der Ultrahocherhitzung in der Erhitzungsvorrichtung. Das direkte Erhitzen kann insbesondere durch direktes Erhitzen durch Wasserdampf ausgeführt werden. Das direkte Erhitzen kann beispielsweise durch Dampfinfusion oder Dampfinjektion ausgeführt werden. Die Erhitzungsvorrichtung kann insbesondere einen Mischraum oder Dampfinfusionsbehälter umfassen oder als solcher ausgebildet sein, in dem sich Wasserdampf und Lebensmittelprodukt mischen können, sodass das Lebensmittelprodukt die Behandlungstemperatur erreicht. Die Behandlungstemperatur für UHT-Erhitzung kann beispielsweise zwischen 130°C und 150°C, z.B. bei 140°C liegen.

Anschließend kann das Produkt (optional) über einen bestimmten Zeitraum auf der Behandlungstemperatur gehalten werden. Dabei kann es beispielsweise in einer Heißhaltestrecke, die optional an die Erhitzungsvorrichtung angeschlossen sein kann, heiß gehalten werden.

Anschließend wird das Produkt flash-gekühlt von der Behandlungstemperatur auf eine Abkühltemperatur. Flash-Kühlen (flash cooling), auch Entspannungskühlung, ist ein Kühlen durch Unterdruck. Es kann insbesondere ein Abziehen des Flash-Dampfes umfassen, und entzieht somit dem Lebensmittelprodukt gleichzeitig Wasser. Das Flash-Kühlen kann das Produkt insbesondere etwa auf die Eintrittstemperatur vor der Direkterhitzung herunterkühlen, so dass der Wassergehalt des flash-gekühlten Produktes in etwa dem Wassergehalt des Eingangsproduktes (vor dem Direkterhitzen) entsprechen kann.

Anschließend kann das durch Flash-Kühlen gekühlte Produkt auf die Weiterverarbeitungstemperatur, z.B. Abfülltemperatur, weiter heruntergekühlt werden, und anschließend weiterverarbeitet werden, z.B. vor Abfüllung in einem Puffer gespeichert werden oder direkt abgefüllt werden. Die Weiterverarbeitungstemperatur kann beispielsweise zwischen 2°C und 30°C liegen. Zusätzlich kann das durch Flash-Kühlen gekühlte Produkt vor Abkühlung auf die Weiterverarbeitungstemperatur einem Homogenisator zur Homogenisierung des durch Flash-Kühlen gekühlten Produkts zugeführt werden.

Der beim Flash-Kühlen abgezogene Dampf (Flash-Dampf) kann zum Auskondensieren in einen Kondensator geleitet werden, von dort kann es beispielsweise aus der Vorrichtung abgeleitet werden. Der Kondensator kann durch einen separaten Kühlkreislauf gekühlt werden. Das Kondensat kann, wenn es aus dem Kondensator abgeleitet wird, eine Temperatur von etwa 80°C, z.B. zwischen 70°C und 90°C haben.

Eine Vorrichtung zur direkten Erhitzung eines flüssigen Lebensmittelproduktes mittels Ultrahochtemperatur (UHT) umfasst somit einen Produktvorwärmer, der insbesondere als Wärmetauscher ausgebildet sein kann, zum Vorwärmen des (zugeführten) Produktes auf die Eintrittstemperatur.

Die Vorrichtung umfasst des Weiteren eine stromabwärts vom Vorwärmer angeordnete Erhitzungsvorrichtung zum direkten Erhitzen des vorgewärmten Produktes auf die Behandlungstemperatur, insbesondere durch Dampfinfusion oder Dampfinjektion. Die Vorrichtung kann des Weiteren stromabwärts der Erhitzungsvorrichtung optional eine Heißhaltestrecke zum heiß halten des Produktes auf der Behandlungstemperatur umfassen. Stromabwärts der Erhitzungsvorrichtung (und der Heißhaltestrecke, falls vorhanden) umfasst die Vorrichtung einen Flash-Kühler, in dem das Produkt, insbesondere etwa auf die Eintrittstemperatur vor der Direkterhitzung, durch Flash-Kühlen (Entspannungskühlen) heruntergekühlt wird.

Die Vorrichtung umfasst zudem einen Produktkühler, der insbesondere als Wärmetauscher ausgebildet sein kann. Der Produktkühler ist stromabwärts des Flash-Kühlers angeordnet und dazu ausgebildet, das Produkt nach dem Flash-Kühlen weiter abzukühlen. Der Produktkühler kann insbesondere das Produkt auf eine Weiterbehandlungstemperatur (bei der das Produkt weiterverarbeitet, z.B. gespeichert oder abgefüllt wird) abkühlen, oder auf eine Temperatur oberhalb der Weiterbehandlungstemperatur abzukühlen.

Stromabwärts des Produktkühlers können in der Vorrichtung noch ein oder mehrere weitere Produktkühler, z.B. Wärmetauscher, angeordnet sein, um das Produkt weiter abzukühlen, insbesondere auf die Weiterbehandlungstemperatur.

Die Vorrichtung kann einen Kondensator umfassen, in den der aus dem Flash-Kühler abgezogene Flash-Dampf zum Auskondensieren geführt wird. Der Kondensator kann von einem separaten Kühlkreislauf, z.B. mit Wasser, gekühlt werden. Vom Kondensator aus kann dann ein Kondensat mit einer Temperatur von ca. 80°C, z.B. zwischen 70°C und 90°C weggeführt werden.

Die Vorrichtung umfasst einen Sekundärkreislauf zum Transport von Wärme vom Produktkühler an den Produktvorwärmer. Der Sekundärkreislauf kann insbesondere Wärme vom Produkt im Produktkühler aufnehmen und diese im Produktvorwärmer an das Produkt übertragen. Der Sekundärkreislauf kann ein Betriebsmedium, z.B. Wasser oder ein anderes Sekundärmedium, das Wärme speichern kann, umfassen, und ist dazu ausgebildet, mit dem Betriebsmedium Wärme vom Produktkühler an den Produktvorwärmer zu transportieren; hierzu wird insbesondere das Betriebsmedium im Sekundärkreislauf, z.B. durch eine Pumpe, zirkuliert. Insbesondere kann für als Wärmetauscher ausgebildeter Produktkühler und Produktvorwärmer der Sekundärkreislauf an die Wärmetauscher sekundärseitig angeschlossen sein. Der Sekundärkreislauf verbindet insbesondere Produktvorwärmer und Produktkühler. Der Sekundärkreislauf dient somit insbesondere der Energierückgewinnung vom pasteurisierten Produkt am Flash-Auslauf auf das vorzuwärmende und zu pasteurisierende Produkt (der Vorrichtung zugeführte Produkt).

Wärmepumpen sind als solche bekannt. Sie umfassen eine Wärmequelle, bei der Wärme an die Wärmepumpe zugeführt wird, und eine Wärmesenke, durch die die Wärmepumpe Wärme (insbesondere mit einer höheren Temperatur als der Temperatur der Wärmequelle) abgibt.

Im Sekundärkreislauf ist die Wärmesenke einer Wärmepumpe angeordnet. Hierbei kann insbesondere der Auslauf des Sekundärkreislaufs aus dem Produktkühler mit dem Eingang der Wärmesenke, insbesondere strömungsleitend, verbunden sein. Der Ausgang der Wärmesenke kann mit dem Einlauf des Sekundärkreislaufs in den Produktvorwärmer verbunden sein. Der Ausgang der Wärmesenke und der Einlauf des Sekundärkreislaufs in den Produktvorwärmer können direkt verbunden sein (d.h. ohne Zwischenelemente außer Leitungen, Rohren oder ähnlichem). Alternative können sie über ein oder mehrere Zwischenelemente verbunden sein.

Damit kann insbesondere mit der Wärmesenke der Sekundärkreislauf geheizt werden, so dass dem Produktvorwärmer mehr Wärme zugeführt werden kann als nur im Produktkühler gewonnene Wärme.

Die Anordnung der Wärmesenke im Sekundärkreislauf kann insbesondere vorteilhaft sein, weil die Hygieneanforderungen im Sekundärkreislauf niedriger sind als im Produktkreislauf und/oder weil der Einbau, insbesondere bei strömungsleitender Verbindung, recht einfach sein kann und/oder weil wenige zusätzliche Bauteile benötigt werden.

Die Wärmequelle der Wärmepumpe kann ebenfalls in der Vorrichtung zur direkten Erhitzung von flüssigen Lebensmitteln angeordnet sein, um Wärme aus der Vorrichtung zurückzugewinnen. Sie kann also insbesondere Wärme, die im Verfahren zur direkten Erhitzung eines Lebensmittelproduktes anfällt, zurückgewinnen.

Die Vorrichtung kann, wie zuvor beschrieben, einen Kondensator mit einem Kühlkreislauf umfassen. Dieser Kühlkreislauf kann als separater Kühlkreislauf ausgebildet sein, also insbesondere separat vom Sekundärkreislauf und separat vom Lebensmittelproduktstrom ausgebildet sein. Die Wärmequelle der Wärmepumpe kann im Kühlkreislauf des Kondensators, insbesondere strömungsleitend, angeordnet sein.

Zusätzlich kann der Ausgang der Wärmequelle im Kühlkreislauf des Kondensators mit einem weiteren Kühler, z.B. einem Kühlturm, im Kühlkreislauf des Kondensators verbunden sein. Der zusätzliche Kühler kann z.B. als Wärmetauscher ausgebildet sein. Dies kann insbesondere dazu beitragen, die notwendige Kühltemperatur für den Kondensator zu erreichen. Der Kühler kann insbesondere am Ausgang der Wärmequelle angeordnet sein.

Die Kühlwasseraustrittstemperatur aus dem Kondensator kann durch den Kühlwassermassestrom angepasst werden, also insbesondere durch eine Einstellung des Kühlwassermassestroms geändert werden. Durch diese Einstellung des Kühlwassermassestroms kann auch gleichzeitig die Wärmepumpe regelbar sein bzw. im Verfahren geregelt werden.

Durch die Anordnung der Wärmequelle in der Vorrichtung zur direkten Erhitzung eines flüssigen Lebensmittelproduktes, insbesondere dem Kühlkreis des Kondensators, kann ein Teil der Wärme des Direkterhitzungsprozesses als Nutzwärme zurückgewonnen werden.

Zusätzlich kann die Wärmequelle der Wärmepumpe mit einem Erwärmer, der z.B. als Wärmetauscher ausgebildet sein kann, (energetisch) verbunden sein. Der Erwärmer kann insbesondere im Kühlkreislauf des Kondensators angeordnet sein, und (im angeschalteten Zustand) dazu ausgebildet sein, dem Kühlkreislauf des Kondensators Wärmeenergie zuzuführen. Der Kühlkreislauf kann somit insbesondere durch den Erwärmer beheizbar sein. Der Erwärmer kann insbesondere als Wärmetauscher ausgebildet sein, der durch Dampf oder Heißwasser oder Warmwasser beheizbar ist. Der Erwärmer kann mit dem Eingang der Wärmequelle verbunden sein. Insbesondere kann dabei der Auslauf des Erwärmers mit dem Eingang der Wärmequelle energetisch verbunden sein.

Dieser Erwärmer kann schaltbar, insbesondere ein- und ausschaltbar sein. Er kann insbesondere dann verwendet werden, wenn beim Anfahren der Wärmepumpe (Hochfahren der Vorrichtung) noch nicht ausreichen Abwärme am Kondensator anfällt. Der Erwärmer kann insbesondere so im Kühlkreislauf des Kondensators angeordnet sein, dass sein Auslauf mit dem Eingang der Wärmequelle (energetisch) verbunden ist. Insbesondere kann der Auslauf eines als Wärmetauschers ausgebildeten Erwärmers mit dem Eingang der Wärmequelle strömungsleitend verbunden sein.

Die Wärmepumpe kann so eingestellt oder einstellbar sein, dass der Sekundärkreislauf durch die Wärmepumpe, zumindest zeitweise, so geheizt wird, dass das Produkt im Produktvorwärmer auf die Eintrittstemperatur vorgewärmt wird. Insbesondere kann somit der Sekundärkreislauf aus dem Produktkühler und der Wärmepumpe die notwendige Wärme für das Vorheizen des Produktes auf die Eintrittstemperatur aufnehmen. Die Wärmepumpe kann somit insbesondere die Verluste beim Rückgewinnen von Energie ausgleichen. Diese Einstellung der Wärmepumpe kann insbesondere im laufenden Betrieb (Produktionsmodus; also insbesondere nach dem Hochfahren und/oder vor dem Herunterfahren der Vorrichtung) erfolgen. Das Verfahren kann umfassen, die die Wärmepumpe entsprechend einzustellen, insbesondere im laufenden Betrieb (Produktionsmodus, also insbesondere nach dem Hochfahren oder vor dem Herunterfahren der Vorrichtung). Insbesondere kann die Wärmepumpe einstellbar sein, bzw. im Verfahren eingestellt werden, dass sie das Betriebsmedium des Sekundärkreislaufs (am Ausgang der Wärmesenke) auf eine Temperatur von etwa 85°C, z.B. im Temperaturbereich, z.B. von 70°C bis 100°C heizt.

Der Sekundärkreislauf kann einen Erhitzer umfassen, der insbesondere als Wärmetauscher ausgebildet sein kann. Der Erhitzer kann beispielsweise mit Dampf oder Heißwasser beheizbar sein.

Der Ausgang der Wärmesenke kann mit dem Einlauf des Erhitzers (insbesondere direkt, d.h. ohne Zwischenelemente außer Leitungen, Rohren oder ähnlichem) verbunden sein und der Auslauf des Erhitzers mit dem Einlauf des Produktvorwärmers (insbesondere direkt, d.h. ohne Zwischenelemente außer Leitungen, Rohren oder ähnlichem) verbunden sein. Alternativ kann der Auslauf eines Erhitzers (insbesondere direkt, d.h. ohne Zwischenelemente außer Leitungen, Rohren oder ähnlichem) mit dem Eingang der Wärmesenke verbunden sein, also der Erhitzer zwischen Auslauf des Sekundärkreislaufs aus dem Produktkühlers und Eingang der Wärmesenke angeordnet sein.

Durch den Erhitzer kann somit dem Sekundärkreislauf zusätzliche Wärme hinzugefügt werden, z.B., wenn durch die Wärmepumpe nicht genügend Wärme bereitgestellt werden kann oder die Wärmepumpe nicht verwendet werden soll. Insbesondere bei dem Hochfahren der Vorrichtung zur direkten Erhitzung eines flüssigen Lebensmittelproduktes, wenn noch kein direkt erhitztes Produkt vorliegt und/oder die Wärmepumpe erst anfahren muss, kann dieser Erhitzer zum Einsatz kommen. Der Erhitzer kann auch dann Verwendung finden, wenn die Vorrichtung zur Direkterhitzung gereinigt und oder sterilisiert wird. Insbesondere beim Sterilisieren der Anlage (SIP) werden Temperaturen benötigt, die mit der Wärmequelle der Wärmepumpe nicht erreicht werden können.

Der Erhitzer kann einstellbar sein, und insbesondere nach Bedarf angeschaltet, ausgeschaltet oder eingestellt werden. Der Erhitzer kann so eingestellt werden oder sein, dass der Sekundärkreislauf so geheizt wird, dass das Produkt im Produktvorwärmer auf die Eintrittstemperatur erwärmt wird. Im Verfahren kann im Sekundärkreislauf mit dem Erhitzer (zusätzlich oder alternativ zur Wärmepumpe) geheizt werden.

Beispielsweise kann der Erhitzer so eingestellt werden oder einstellbar sein, dass die Wärmepumpe mit dem Erhitzer auf einen konstanten coefficient of performance (COP, bzw. Heizzahl) geregelt wird. Somit kann die Wärmepumpe an einem möglichst günstigen Betriebspunkt laufen. Alternativ oder zusätzlich kann der Erhitzer so einstellbar oder eingestellt werden, dass die Betriebskosten minimiert werden. Hierbei kann insbesondere das Verhältnis von Kosten für Strom und Kosten für den Betrieb des Erhitzers, z.B. Heißwasser oder Dampf, berücksichtigt werden, um die Betriebskosten für die Kombination aus Wärmepumpe und Erhitzer insgesamt zu minimieren.

Der Erhitzer kann (insbesondere im Produktionsmodus, insbesondere nach dem Hochfahren der Vorrichtung) im Verfahren mindestens zeitweise abgeschaltet werden. Ins besondere kann er nach dem Hochfahren der Vorrichtung im Verfahren abgeschaltet werden und bleiben.

Der Sekundärkreislauf kann des Weiteren einen Sekundärkreislaufkühler umfassen, der insbesondere als Wärmetauscher ausgebildet sein kann. Die zugeführte Kühlenergie kann beispielsweise über einen Kühlturm oder andere niederpreisige Energie zugeführt werden. Der Sekundärkreislaufkühler kann im Sekundärkreislauf zwischen Auslauf des Produktvorwärmers und Einlauf des Produktkühlers angeordnet sein. Der Sekundärkreislaufkühler kann dazu verwendet werden, eine ausreichende Kühlung des heißen Produktes zu ermöglichen. Dieser Sekundärkreislaufkühler kann schaltbar sein und mindestens zeitweise angeschaltet werden. Insbesondere beim Abschaltvorgang der Vorrichtung zur direkten Erhitzung eines flüssigen Lebensmittelproduktes, kann dieser Kühler eingeschaltet werden, da dann keine Kühlung das Sekundärkreislauf durch das zugeführte Produkt im Produktvorwärmer mehr erfolgen kann. Alternativ oder zusätzlich kann der Sekundärkreislaufkühler zum Abkühlen der Wärmesenke der Wärmepumpe beim Abschalten der Vorrichtung dienen.

Der Sekundärkreislauf kann noch weitere Elemente, z.B. eine Pumpe zum Bewegen des Betriebsmediums, umfassen. Die Pumpe kann (um das erforderliche Druckniveau im heißeren Bereich des Sekundärkreislaufs bereitzustellen) insbesondere im kühlen Bereich des Sekundärkreislaufs zwischen Auslauf des Produktvorwärmers und Einlauf des Produktkühlers angeordnet sein. Insbesondere kann sie stromabwärts des Auslaufs eines Sekundärkreislaufkühlers angeordnet sein, wenn ein solcher vorhanden ist.

Die Vorrichtung kann des Weiteren einen zusätzlichen Kühler für das Produkt stromabwärts des Produktkühlers umfassen. Der zusätzliche Kühler kann insbesondere ein Wärmetauscher sein oder einen solchen umfassen, der an einen externen Kühlkreislauf angeschlossen sein kann.

Die Erfindung umfasst das Weiteren ein Verfahren zur direkten Erhitzung eines flüssigen Lebensmittelproduktes mittels Ultrahochtemperatur in einer Vorrichtung, die einen Produktvorwärmer, eine Erhitzungsvorrichtung zum direkten Erhitzen des vorgewärmten flüssigen Lebensmittelproduktes, einen Flash-Kühler und einen Produktkühler und einen Sekundärkreislauf zum Transport von Wärme vom Produktkühler zum Produktvorwärmer umfasst, wobei im Sekundärkreislauf die Wärmesenke einer Wärmepumpe angeordnet ist. Das Verfahren kann insbesondere in einer zuvor beschriebenen Vorrichtung durchgeführt werden. Das Verfahren kann jeden einzelnen, mehrere oder alle zuvor beschriebenen Verfahrensschritte umfassen.

Insbesondere kann das Verfahren umfassen, die Wärmepumpe mindestens zeitweise so einzustellen, dass der Sekundärkreislauf durch die Wärmesenke so geheizt wird, dass das Produkt im Produktvorwärmer auf die Eintrittstemperatur erwärmt wird.

Alternativ oder zusätzlich kann das Verfahren umfassen, einen Erhitzer im Sekundärkreislauf zu schalten, insbesondere den Sekundärkreislauf mit dem Erhitzer zu heizen. Dabei kann beispielsweise die Wärmepumpe auf einen konstanten COP geregelt werden und/oder der Erhitzer abgeschaltet werden.

Alternativ oder zusätzlich kann das Verfahren umfassen, den Sekundärkreislauf mit einem Sekundärkreislaufkühler zu kühlen.

Das Verfahren kann insbesondere umfassen, die Vorrichtung beim Startvorgang (Aufheizen) der Vorrichtung mit Wasser (statt wie sonst mit Produkt während der Produktion) zu betreiben. Dabei kann insbesondere, um Wasser zu sparen, das Wasser im Kreis durch die Anlage gefahren werden. In so einem Verfahren kann beispielsweise, sobald alle relevanten Anlagenteile (d.h. alle Anlagenteile, deren Temperatur bei der Produktion richtig eingestellt sein müssen, insbesondere Produktvorwärmer und Produktvorkühler, sowie u.a. der Erhitzungsvorrichtung zum direkten Erhitzen des Produktes mit Dampf, eine Heißhaltestrecke und der Flash-Kühler) das erforderliche Temperaturprofil für die Produktion aufweisen, die Produktion beginnen, indem das Wasser mit dem zu behandelnden Produkt ausgeschoben wird.

Beim Startvorgang der Vorrichtung kann insbesondere die Wärmepumpe angefahren werden, während (statt des Produkts) Wasser in der (sonst) produktdurchströmten Seite des Produktvorwärmers und des Produktvorkühlers befördert wird, insbesondere Produktvorwärmer und Produktvorkühler auf der (sonst) produktdurchströmten Seite mit Wasser durchströmt werden. Hierbei kann insbesondere ein als Wärmetauscher ausgebildeter Produktvorwärmer mit Wasser (statt Produkt) auf der (sonst) produktdurchströmten Seite aufgeheizt werden.

Das Verfahren kann umfassen, dass beim Herunterfahren der Vorrichtung zunächst das noch in der Anlage befindliche Produkt mit Wasser ausgeschoben wird, insbesondere während die Anlage noch im Normalbetrieb (Produktionsbetrieb) läuft. Dann kann nach dem Ausschieben des Produktes mit Wasser die Anlage, oder zumindest die Wärmepumpe und Produktvorwärmer und Produktvorkühler, kontrolliert heruntergefahren werden.

Alternativ oder zusätzlich kann das Verfahren umfassen, den Erwärmer, der insbesondere im Kühlkreislauf des Kondensators angeordnet sein kann, einzuschalten und/oder abzuschalten. Der Erwärmer kann insbesondere beim Hochfahren der Vorrichtung (wenn beim Anfahren der Wärmepumpe noch nicht ausreichend Abwärme am Kondensator anfällt) eingeschaltet und nach dem Hochfahren der Vorrichtung (im Produktionsmodus) abgeschaltet werden.

Ein von der Erfindung umfasstes Verfahren zur direkten Erhitzung eines flüssigen Lebensmittelproduktes mittels Ultrahochtemperatur kann die folgenden Schritte umfassen: Vorwärmen des flüssigen Lebensmittelprodukts, direktes Erhitzen des flüssigen Lebensmittelprodukts, Flash-Kühlen des erhitzen flüssigen Lebensmittelprodukts, weiteres Kühlen des gekühlten flüssigen Lebensmittelprodukts, Rückgewinnung von Wärme, die beim Kühlen aus dem Lebensmittelprodukt gewonnen wird und Verwenden der Wärme zum Vorwärmen des flüssigen Lebensmittelprodukts. Dabei kann die zurückgewonnene Wärme in eine Wärmesenke einer Wärmepumpe eingeleitet werden. Ein derartiges Verfahren kann einen oder mehrere weitere der zuvor in Bezug auf Verfahren, Vorrichtung und System beschriebenen Schritte umfassen. Das Verfahren kann insbesondere in einer Vorrichtung oder einem System wie oben beschrieben, durchgeführt werden.

Die Erfindung umfasst des Weiteren ein System zum Abfüllen eines flüssigen Lebensmittelproduktes, das eine Vorrichtung zur direkten Erhitzung eines flüssigen Lebensmittelproduktes wie zuvor beschreiben und eine Abfüllvorrichtung zum Abfüllen des flüssigen Lebensmittelproduktes umfasst. Die Abfüllvorrichtung ist insbesondere so angeordnet, dass mit ihr das pasteurisierte Produkt in geeignete Behälter, z.B. Flaschen, Dosen, Kartons, abgefüllt werden kann (also stromabwärts der Vorrichtung zur direkten Erhitzung eines flüssigen Lebensmittelproduktes).

Die Erfindung umfasst des Weiteren ein Verfahren zum Weiterverarbeiten eines flüssigen Lebensmittelproduktes, das ein Verfahren zur direkten Erhitzung des flüssigen Lebensmittelproduktes mittels Ultrahochtemperatur wie zuvor beschrieben umfasst und des Weiteren ein Speichern des flüssigen Lebensmittelproduktes in einem Pufferspeicher, insbesondere bei der Weiterverarbeitungstemperatur, und/oder ein Abfüllen des flüssigen Lebensmittelproduktes nach dem Abkühlen, insbesondere bei der Weiterverarbeitungstemperatur, umfasst. Das Abfüllen des flüssigen Lebensmittelproduktes kann insbesondere in einem zuvor beschriebenen System zum Abfüllen eines flüssigen Lebensmittelproduktes erfolgen.

Die Erfindung umfasst zudem eine Verwendung einer Wärmepumpe bei einer direkten Erhitzung eines flüssigen Lebensmittelproduktes mittels Ultrahochtemperatur, insbesondere in einer Vorrichtung wie zuvor beschrieben, wobei die Wärmesenke der Wärmepumpe in einem Sekundärkreislauf zum Transport von Wärme von einem Produktkühler zu einen Produktvorwärmer angeordnet ist. Das Verwenden der Wärmepumpe kann insbesondere alle im Zusammenhang mit der Vorrichtung und Verfahren beschriebenen Schritte umfassen.

Weitere Details und Aspekte sind anhand der folgenden, nicht maßstabsgetreuen Figuren ersichtlich. Hierbei zeigt
- Figur 1: eine beispielhafte Vorrichtung zur direkten Erhitzung eines flüssigen Lebensmittelproduktes;
- Figur 2: Details einer beispielhaften Vorrichtung zur Erhitzung eines flüssigen Lebensmittelproduktes, und
- Figur 3: Schritte eines beschriebenen Verfahrens.

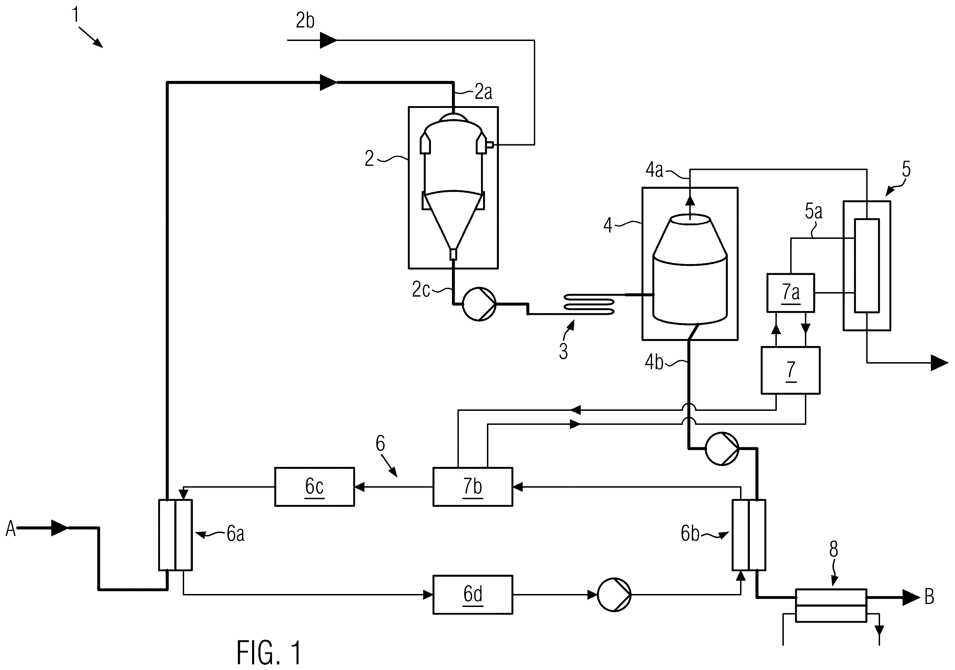

Figur 1 zeigt eine Vorrichtung 1 zur direkten Erhitzung eines flüssigen Lebensmittelproduktes.

Ein Lebensmittelprodukt (Produkt) wird durch Eingang A in die Vorrichtung geführt. Es wird durch einen Produktvorwärmer 6a geführt und dort auf eine Eintrittstemperatur vorgewärmt. Von dort gelangt es in eine Erhitzungsvorrichtung 2. Das Produkt wird hierbei durch Eingang 2a der Erhitzungsvorrichtung 2 dieser zugeführt. Dampf zum direkten Erhitzen des Produktes wird durch Eingang 2b der Erhitzungsvorrichtung zugeführt. Mit dem Dampf wird das Produkt dann direkt erhitzt. Das erhitzte Lebensmittel wird durch Ausgang 2c aus der Erhitzungsvorrichtung abgepumpt. Hier ist eine optionale Pumpe beispielhaft eingezeichnet. Diese kann jedoch auch an anderen Stellen angeordnet sein oder nicht von der Vorrichtung umfasst sein. Die Vorrichtung kann eine optionale Heißhaltestrecke 3 umfassen. In alternativen Ausführungsformen (hier nicht gezeigt) ist keine Heißhaltestrecke umfasst.

Anschließend gelangt das Produkt in einen Flash-Kühler 4 und wird dort durch Flash-Kühlen (Entspannungskühlen) gekühlt. Der Flash-Dampf wird über Ausgang 4a des Flash-Kühlers 4 abgezogen und in einen optional von der Vorrichtung umfassten Kondensator auskondensiert. Das Kondensat kann aus dem Kondensator abgeleitet werden. Es kann beim Ableiten aus dem Kondensator beispielsweise eine Temperatur von etwa 80°C, zum Beispiel zwischen 70°Cund 90°C haben.

Das Produkt wird aus dem Flash-Kühler 4 durch Leitung 4b abgepumpt und gelangt in einen Produktkühler 6b. Auch hier ist lediglich beispielhaft eine (nicht zwangsläufig umfasste) Pumpe eingezeichnet.

Vom Produktkühler 6b kann das Produkt über einen optionalen weiteren Produktkühler 8, der insbesondere als Wärmetauscher ausgebildet sein kann, an den Ausgang der Vorrichtung B geführt werden.

Die Vorrichtung umfasst des Weiteren einen Sekundärkreislauf 6, der den Produktkühler 6b (sekundärseitig) mit dem Produktvorwärmer 6a (sekundärseitig) verbindet. Dieser Sekundärkreislauf 6 überträgt somit Wärme vom Produktkühler 6b an den Produktvorwärmer 6a.

Erfindungsgemäß ist in diesem Sekundärkreislauf 6 die Wärmesenke 7b einer Wärmepumpe 7 angeordnet. Hierbei kann insbesondere, wie eingezeichnet, der Eingang der Wärmesenke mit dem Auslauf des Sekundärkreislaufs 6 aus dem Produktkühler 6b strömungsleitend verbunden sein. Durch diese Anordnung kann die Wärmepumpe besonders einfach in die Vorrichtung 1 integriert werden, da sie nur in einen bereits bestehenden Sekundärkreislauf angeschlossen werden muss.

Der Ausgang der Wärmesenke 7b ist mit dem Einlauf des Sekundärkreislaufs 6 in den Produktvorwärmer 6a verbunden. Optional kann ein Erhitzer 6c zwischen Ausgang der Wärmesenke 7b und dem Einlauf des Produktvorwärmers 6a angeordnet sein. In Alternativen (hier nicht gezeigt) muss dieser nicht vorhanden sein. In einer weiteren Alternative kann ein optionaler Erhitzer 6c vorgesehen sein, wobei die Position von Wärmesenke 7b und Erhitzer 6c vertauscht sein können, also der Auslauf des Sekundärkreislaufs 6 aus dem Produktkühler 6b mit dem Erhitzer 6c und der Auslauf des Erhitzers 6c mit dem Eingang der Wärmesenke 7b verbunden sein kann (hier nicht gezeigt).

Zusätzlich kann im Sekundärkreislauf optional ein Sekundärkreislaufkühler 6c umgefasst sein (hier beispielhaft eingezeichnet; in anderen Ausführungsformen muss er nicht vorhanden sein). Dieser kann zwischen dem Auslauf des Produktvorwärmers und dem Einlauf des Produktkühlers 6b angeordnet sein und somit sicherstellen, dass die notwendige Kühlung des Produktes durch den Produktkühler 6b erfolgen kann.

Die Wärmequelle 7a der Wärmepumpe 7 kann, wie gezeigt, in der Vorrichtung, hier beispielsweise im Kühlkreislauf 5a des Kondensators 5, angeordnet sein. Die Wärmequelle 7a der Wärmepumpe kann somit einen Teil der Abwärme beim Kühlen des Kondensators 5 aus dem Kühlkreislauf 5a zurückgewinnen und dem Sekundärkreislauf 6 zuführen. Optional kann im Kühlkreislauf 5a, insbesondere am Ausgang der Wärmequelle, noch ein weiterer Kühler angeordnet sein (hier nicht gezeigt).

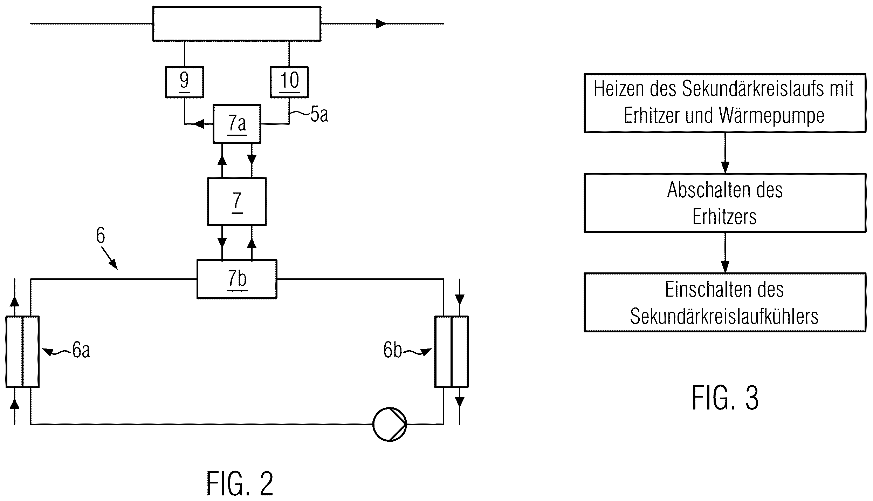

In Figur 2 ist beispielhaft eine alternative Ausführungsform des Sekundärkreislaufes 6 und der Wärmepumpe 7 mit Kondensator 5 eingezeichnet.

Der Sekundärkreislauf 6 mit Wärmepumpe 7 und Kondensator 5 können alternativ zu der in Figur 1 gezeigten Anordnung dieser Teile in einer Vorrichtung wie in Figur 1 beschrieben angeordnet sein.

In Figur 2 umfasst der Sekundärkreislauf 6 zusätzlich zur Pumpe des Sekundärkreislaufs nur die Wärmesenke der Wärmepumpe für das zusätzliche Heizen des Sekundärkreislaufs. Ein Erhitzer und /oder ein Sekundärkreislaufkühler können jedoch ebenfalls umfasst sein (nicht gezeigt). In der gezeigten Ausführungsform ist die Wärmequelle 7a der Wärmepumpe 7 im Kühlkreislauf 5a für den Kondensator 5 angeordnet. Hierbei ist am Ausgang der Wärmequelle 7a beispielhaft ein zusätzlicher Kühler 9 angeordnet, der beispielsweise als Kühlturm oder ähnliches ausgebildet sein, um eine zuverlässige Kühlung des Kondensators sicher zu stellen. Ein zusätzlicher Kühler 9, wie in Figur 2 gezeigt und hier beschrieben, kann beispielsweise auch in der Ausführungsform der Figur 1, insbesondere am Ausgang der Wärmequelle 7a im Kühlkreislauf 5a für den Kondensator 5, umfasst sein (nicht gezeigt).

Zusätzlich ist am Eingang der Wärmequelle 7a ein Erwärmer 10 im Kühlkreislauf 5a des Kondensators 5 eingezeichnet. Der Erwärmer 10 ist beispielhaft im Kühlkreislauf so angeordnet, dass sein Auslauf mit dem Eingang der Wärmequelle 7a verbunden ist. Der Erwärmer kann schaltbar sein. Er kann insbesondere beim Hochfahren der Vorrichtung ein- und nach dem Hochfahren der Vorrichtung (im Produktionsmodus) wieder ausgeschaltet werden, wenn am Kondensator genügen Abwärme für die Wärmequelle anfällt. Somit kann in dem in Figur 2 gezeigten Beispiel der Erwärmer insbesondere beim Hochfahren der Vorrichtung zum Einsatz kommen. Ein Erwärmer 10 kann beispielsweise auch in der Ausführungsform der Figur 1, insbesondere am Eingang der Wärmequelle 7a Kühlkreislauf 5a für den Kondensator 5, umfasst sein (nicht gezeigt).

Figur 3 beschreibt Schritte eines möglichen Verfahrens zur direkten Erhitzung eines flüssigen Lebensmittelproduktes.

Das beispielhaft in Figur 3 beschriebene Verfahren umfasst beispielhaft Schritte eines möglichen Verfahrens zum Erhitzen eines flüssigen Lebensmittelproduktes in einer zuvor beschriebenen Vorrichtung.

Die gezeigten Verfahrensschritte umfassen beispielhaft Schritte, wie sie beim Hochfahren (Start) und dem Herunterfahren (Abschalten) der Vorrichtung zum Einsatz kommen können. In anderen Verfahren können ein oder zwei der genannten Schritte fehlen.

Insbesondere umfasst das Verfahren ein Heizen des Sekundärkreislaufes mit dem Erhitzer und der Wärmepumpe. Besonders beim Startvorgang kann ein Heizen des Sekundärkreislaufs mit dem Erhitzer zusätzlich zur Wärmepumpe sinnvoll und notwendig sein, da noch kein erhitztes Produkt vorhanden ist, dessen Wärme durch den Sekundärkreislauf transportiert werden kann, und die Wärmepumpe allein typischerweise nicht genügend Wärme liefert, um das Produkt ausreichend vorzuwärmen. Zudem benötigt die Wärmepumpe selbst eine gewisse Zeit, um auf Nennleistung hochzufahren. Dies ist dadurch begründet, dass die Verdichter der Wärmepumpe erst anlaufen müssen und sich das Temperaturprofil in der Wärmepumpe erst einstellen muss.

Anschließend kann, z.B. wenn der Startvorgang der Vorrichtung abgeschlossen ist und die Vorrichtung im Normalbetrieb ist, der Erhitzer abgeschaltet werden. Damit kann der Sekundärkreislauf durch die Wärmepumpe soweit geheizt werden, dass er die notwendige Wärme zum Vorwärmen des Produktes auf die Eintrittstemperatur bereitstellen kann. Die Wärmepumpe kann somit insbesondere den Verlust der Wärme bei der Wärmerückgewinnung ausgleichen. In alternativen Verfahrensschritten (hier nicht gezeigt), kann nach dem Startvorgang der Erhitzer weiterverwendet werden, z.B. um die Wärmepumpe bei einem konstanten COP zu betreiben und/oder Betriebskosten zu optimieren.

Der Startvorgang der Vorrichtung kann auch ein Aufheizen der relevanten Anlagenteile (die für die Produktion ein Temperaturprofil aufweisen müssen, insbesondere des Produktvorwärmers und des Produktvorkühlers, insbesondere von als Wärmetauscher ausgebildeten Produktvorwärmer und Produktvorkühler), und ein Anfahren der Wärmepumpe mit Wasser (anstelle von Produkt) in der (sonst) produktdurchströmten Seite des Produktvorwärmers und des Produktvorkühlers beinhalten. Insbesondere können Produktvorwärmer und Produktvorkühler (auf der sonst produktdurchströmten Seite) mit dem Wasser durchströmt werden. Darüber hinaus kann es dabei, um Wasser zu sparen, vorteilhaft sein, dass das Wasser im Kreislauf durch die Anlage gefahren wird. Sobald alle relevanten Anlagenteile, insbesondere Produktvorwärmer und Produktvorkühler, das erforderliche Temperaturprofil für die Produktion aufweisen, kann die Produktion beginnen, in dem das Wasser mit dem zu behandelnden Produkt ausgeschoben wird.

Der Startvorgang der Vorrichtung kann auch beinhalten, dass die Vorrichtung zunächst sterilisiert wird (SIP). Dies ist ein im Betrieb von UHT-Anlagen üblicher Prozess und daher hinreichend bekannt.

Anschließend, z.B. bei einem Herunterfahren der Vorrichtung, wenn dem Vorwärmer 6a kein Produkt mehr zugeführt wird oder die Menge des Produktes reduziert wird, kann dann optional ein Einschalten des Sekundärkreislaufkühlers erfolgen, um den Sekundärkreislauf ausreichend zu kühlen.

Bei einem Herunterfahren der Vorrichtung kann vorteilhaft sein, dass zunächst das noch in der Anlage befindliche Produkt mit Wasser ausgeschoben wird. Nach Ausschieben mit Wasser können die Wärmetauscher und die Wärmepumpe kontrolliert heruntergefahren werden.

Das gezeigte Verfahren kann zusätzlich optional einen, mehrere oder alle zuvor im Zusammenhang mit der Vorrichtung beschriebenen Verfahrensschritte umfassen.

## Patentansprüche

1. Vorrichtung (1) zur direkten Erhitzung eines flüssigen Lebensmittelproduktes mittels Ultrahochtemperatur (UHT), umfassend einen Produktvorwärmer (6a), insbesondere einen als Wärmetauscher ausgebildeten Produktvorwärmer (6a), eine Erhitzungsvorrichtung (2) zum direkten Erhitzen des vorgewärmten flüssigen Lebensmittelproduktes, einen Flash-Kühler (4) und einen Produktkühler (6b), insbesondere einen als Wärmetauscher ausgebildeten Produktkühler (6b),
wobei die Vorrichtung einen Sekundärkreislauf (6) zum Transport von Wärme vom Produktkühler (6b) zum Produktvorwärmer (6a) umfasst,
**gekennzeichnet dadurch, dass** im Sekundärkreislauf (6) die Wärmesenke (7b) einer Wärmepumpe (7) angeordnet ist.

2. Vorrichtung (1) nach Anspruch 1, wobei der Auslauf des Sekundärkreislaufs (6) aus dem Produktkühler (6b) mit dem Eingang der Wärmesenke (7b) strömungsleitend verbunden ist.

3. Vorrichtung (1) nach Anspruch 1 oder Anspruch 2, wobei die Wärmequelle (7a) der Wärmepumpe in der Vorrichtung zur direkten Erhitzung eines flüssigen Lebensmittelproduktes angeordnet ist, um Wärme aus der Vorrichtung zurückzugewinnen.

4. Vorrichtung nach einem der Ansprüche 1 bis 3, wobei die Vorrichtung einen Kondensator (5) mit einem, insbesondere separaten, Kühlkreislauf (5a) umfasst und die Wärmequelle (7a) der Wärmepumpe (7) im Kühlkreislauf (5a) des Kondensators (5) angeordnet ist.

5. Vorrichtung (1) nach Anspruch 4, wobei der Ausgang der Wärmequelle (7a) der Wärmepumpe (7) mit einem weiteren Kühler (9), insbesondere einem Kühlturm, im Kühlkreislauf (5a) des Kondensators (5) verbunden ist und/oder ein Erwärmer (10) im Kühlkreislauf (5a) des Kondensators (5) angeordnet ist, der insbesondere mit dem Eingang der Wärmequelle (7a) verbunden ist.

6. Vorrichtung (1) nach einem der Ansprüche 1 bis 5, wobei die Wärmepumpe (7) dazu einstellbar oder eingestellt ist, dass der Sekundärkreislauf (6) durch die Wärmesenke (6b) so geheizt wird, dass das Produkt im Produktvorwärmer (6a) auf die Eintrittstemperatur vorgewärmt wird.

7. Vorrichtung (1) nach einem der Ansprüche 1 bis 6, wobei der Sekundärkreislauf (6) einen Erhitzer (6c), insbesondere Wärmetauscher, umfasst, wobei insbesondere der Auslauf des Erhitzers (6c) mit dem Einlauf des Produktvorwärmers (6a) verbunden ist, wobei insbesondere der Erhitzer (6c) einstellbar ist, insbesondere so eingestellt oder einstellbar ist, dass die Wärmepumpe (7) mit dem Erhitzer (6c) auf einen konstanten COP regelbar ist und/oder die Betriebskosten minimiert werden.

8. Vorrichtung (1) nach einem der Ansprüche 1 bis Anspruch 7, wobei der Sekundärkreislauf (6) einen Sekundärkreislaufkühler (6d), insbesondere Wärmetauscher, umfasst.

9. System zum Abfüllen eines flüssigen Lebensmittelproduktes, wobei das System eine Vorrichtung (1) nach einem der Ansprüche 1 bis 8 und eine Abfüllvorrichtung zum Abfüllen des flüssigen Lebensmittelproduktes umfasst.

10. Verfahren zur direkten Erhitzung eines flüssigen Lebensmittelproduktes mittels Ultrahochtemperatur (UHT), **gekennzeichnet dadurch, dass** das Verfahren in einer Vorrichtung (1) durchgeführt wird, die einen Produktvorwärmer (6a), eine Erhitzungsvorrichtung (2) zum direkten Erhitzen des vorgewärmten flüssigen Lebensmittelproduktes, einen Flash-Kühler (4) und einen Produktkühler (6b) und einen Sekundärkreislauf (6) zum Transport von Wärme vom Produktkühler (6b) zum Produktvorwärmer (6a) umfasst, **gekennzeichnet dadurch, dass** im Sekundärkreislauf (6) die Wärmesenke (7b) einer Wärmepumpe (7) angeordnet ist, wobei das Verfahren insbesondere in einer Vorrichtung nach einem der Ansprüche 1 - 8 oder insbesondere in einem System nach Anspruch 9 durchgeführt wird.

11. Verfahren nach Anspruch 10, wobei das Verfahren umfasst, zumindest zeitweise die Wärmepumpe (7) so einzustellen, dass der Sekundärkreislauf (6) durch die Wärmesenke (7b) so geheizt wird, dass das Produkt im Produktvorwärmer (6a) auf die Eintrittstemperatur erwärmt wird.

12. Verfahren nach Anspruch 10 oder Anspruch **11,** wobei das Verfahren umfasst, einem Erhitzer (6c) im Sekundärkreislauf (6) zu schalten, insbesondere den Sekundärkreislauf mit dem Erhitzer zu heizen, z.B. um die Wärmepumpe (7) auf einen konstanten COP zu regeln, und/oder den Erhitzer (6c) abzuschalten.

13. Verfahren nach einem der Ansprüche 10 bis 12, wobei das Verfahren umfasst, den Sekundärkreislauf (6) mit einem Sekundärkreislaufkühler (6d) zu kühlen und/oder beim Startvorgang der Vorrichtung die Vorrichtung (1) mit Wasser zu betreiben.

14. Verfahren zum Weiterverarbeiten eines flüssigen Lebensmittelproduktes, umfassend ein Verfahren zur direkten Erhitzung des flüssigen Lebensmittelproduktes mittels Ultrahochtemperatur nach einem der Ansprüche 10 - 13, wobei das Verfahren des Weiteren ein Speichern des flüssigen Lebensmittelproduktes in einem Pufferspeicher und/oder ein Abfüllen des flüssigen Lebensmittelproduktes nach dem Abkühlen umfasst.

15. Verwendung einer Wärmepumpe bei einer direkten Erhitzung eines flüssigen Lebensmittelproduktes mittels Ultrahochtemperatur (UHT), insbesondere in einer Vorrichtung nach einem der Ansprüche 1 bis 8 oder Anspruch 9, wobei die Wärmesenke (7b) der Wärmepumpe (7) in einem Sekundärkreislauf (6) zum Transport von Wärme von einem Produktkühler (6b) zu einem Produktvorwärmer (6a) angeordnet ist.

16. Verfahren zur direkten Erhitzung eines flüssigen Lebensmittelproduktes mittels Ultrahochtemperatur (UHT), **gekennzeichnet durch** die folgenden Schritte: Vorwärmen des flüssigen Lebensmittelprodukts, direktes Erhitzen des flüssigen Lebensmittelprodukts, Flash-Kühlen des erhitzen flüssigen Lebensmittelprodukts, weiteres Kühlen des gekühlten flüssigen Lebensmittelprodukts, Rückgewinnung von Wärme, die beim Kühlen aus dem Lebensmittelprodukt gewonnen wird, Verwenden der Wärme zum Vorwärmen des flüssigen Lebensmittelprodukts, **gekennzeichnet dadurch, dass** die zurückgewonnene Wärme in eine Wärmesenke einer Wärmepumpe eingeleitet wird, wobei das Verfahren insbesondere in einer Vorrichtung nach einem der Ansprüche 1 - 8 oder insbesondere in einem System nach Anspruch 9 durchgeführt wird.
